# EUROPEAN PATENT APPLICATION

(11) **EP 2 662 201 A1**
(43) Date of publication of application: **13.11.2013**
(21) Application number: 12167069.9
(22) Date of filing: 08.05.2012
(51) Int. Cl.: B29C 70/24, B29C 70/52, B32B 5/06, D05B 57/00

(54) **Composite sandwich structure**

(71) Applicant: Groep Stevens International, 9160 Lokeren (BE)
(72) Inventor: Verhaeghe, Jan, 9120 Beveren (BE)
(74) Representative: Duyver, Jurgen Martha Herman

(57) **Abstract**

A device for producing a composite sandwich structure (1), wherein the sandwich structure comprises at least a first and second face sheets (2, 3) of a fibrous reinforcing material sandwiching between them a sheet of a core material (4), the device comprising a connecting fibre inserting apparatus for connecting the first face sheet (1), the core material (4) and the second face sheet (3) by means of connecting fibres (6).

The connecting fibre inserting device comprises at least one needle bar extending transversally in the moving direction of the sandwich structure (1) and provided to exert a reciprocating movement in height direction of the sandwich structure (1). The needle bar comprises a plurality of spaced apart needles (11), arranged to face the first face sheet (2), and provided to take along a length of connecting fibre yarn (6) when reciprocating in and out of the sandwich structure (1) thereby forming a loop at the lower surface of the second face sheet (3). The connecting fibre inserting device also comprises at least one looper (12) arranged on a side facing the second face sheet (3) provided to co-operate with at least one needle (11) for seizing the loop of connecting fibre (6), and wherein the movement of the looper (12) is driven by a driving device which is provided to drive the movement of the looper (12) independently of the needle bar.

## Description

### Field of the invention.

The present invention relates to a device and a method for producing a composite sandwich structure according to the preamble of the first claim.

### Background of the invention.

W003097335 discloses a method for producing a sandwich structure, wherein the sandwich structure comprises a first and second face sheet of a fibrous reinforcing material which sandwich between them a panel of a foamed plastic core material. According to that method, the core material is supplied to the device. At least one upper face sheet of fibrous reinforcing material is supplied along the upper surface of the core material, at least one lower face sheet of fibrous reinforcing material is supplied along the lower surface of the core material. The upper face sheet, the core material and the lower face sheet are connected to each other by tufting using continuous connecting fibres which extend in thickness direction of the structure to form connecting members which extend through the upper face sheet, the core and the lower face sheet. The connecting members are connected to each other along the upper and lower surface of the structure in the displacement direction of the sandwich structure by means of the fibre application device. After the continuous connecting fibres have been applied, the sandwich structure is forwarded towards a pulltrusion device to impregnate the sandwich structure, i.e. the face sheets, the core and the connecting fibres, with a hardenable resin by means of pultrusion and the impregnated sandwich structure is left to harden or cure. Thus, a fibrous reinforced sandwich structure is formed, which contains a plurality of rows of connected resin impregnated fibre columns, wherein the rows extend in the displacement direction of the sandwich structure. Within each row subsequent fibre columns are spaced from each other over a certain distance.

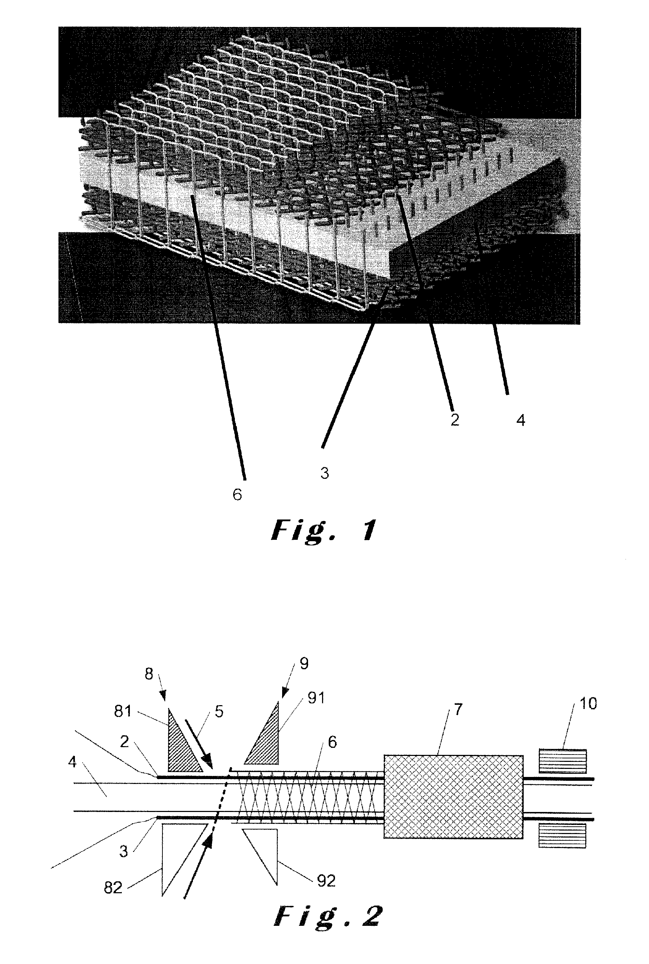

This method and device however present the disadvantage that the subsequent loops which run along a lower surface of the sandwich structure and which connect a previous and a next connecting member and which protrude from the lower side of the sandwich structure, are not always connected to each other as is shown in figure 1. This is unwanted as it may cause the loops to extend in various directions in the resin impregnated product and provide a sandwich structure with a non-uniform surface. It is believed that the presence of non-connected loops adversely affects the uniformity of the sandwich structure.

The method and device disclosed in W003097335 combine the technique of tufting with pulltrusion to produce a resin impregnated sandwich structure.

Conventional tufting machines for producing pile fabrics comprise
- a needle bar with a plurality of needles mounted thereon
- means for moving a material that is to be subjected to tufting in a moving direction past the needle bar while the needle bar is reciprocated in height direction to cause repeated penetration of the material by the needles
- and a looper bar having a plurality of loopers mounted thereon which co-operate with the needles to form loops. The looper bar is positioned on a side of the material sheet opposite the side facing the needle bar.

The needle and looper bar extend in width direction of the material which is to be tufted.

Upon tufting, a continuous yarn strand is fed to the eye of the needle, the needle bar moves towards the material and the needles penetrate the material from the upper surface of the material until they take their lowermost position of reciprocation, to produce loops which protrude from the lower surface of the material. As the needles are withdrawn from the material, the needle bar returns towards its upmost position of reciprocation. The looper bar is pivoted to a position wherein hook portions of the loopers engage the loops, carried in the eyes of the needles. Hooks retain the yarns during upward reciprocation of the needle bar as the needles are withdrawn from the material to form a pair of rows of yarn loops extending transversely across the backing sheet. With the needles retracted from the material each of the thus formed loops is engaged and retained by a looper and the material is moved in the forwarding direction. In a conventional tufting process, looper bar and the loopers pivot rearwardly so that hooks of the loopers, which have their tips extending in the direction of movement of the backing sheet, release the yarn loops just formed. The material advances in the moving direction and the needle bar reciprocates downwardly to initiate another loop forming cycle. This sequence is repeated as the material continues to advance.

Connection of subsequent loops in a row produced by a needle may be achieved if the loop is held sufficiently long by the looper to permit penetration of the loop at the next downward stroke of a needle. This is called "chain stitching" or "sewing through". Conventional tufting devices may contain a single row of needles or a plurality of needle rows, and a single row of loopers or a plurality of rows of loopers. US4.419.944 discloses an apparatus for forming a longitudinal row of stitching in a base fabric. The apparatus comprises a needle plate adapted to support a base fabric to be moved front-to-rear through the machine, a transversally extending elongate needle bar adapted to vertically reciprocate, having uniformly spaced needles depending from it, and a looper mechanism including a looper adapted to cooperate with each needle. Yarn is carried by a needle as it penetrates the base fabric to form a yarn loop. The needle and looper drive mechanisms are connected and synchronized so that the needle is in a lower position penetrating the base fabric while the looper is in a forward position, crossing the needle, for engaging the yarn loop. The hooks are reciprocated twice as many times as the needle is reciprocated.

When the needle rises in the chain-stitching process, the yarn loop is seized by the looper in the forward position of its first stroke of the stitch cycle. The rearward movement of the base fabric carries the yarn loop rearward. While the needle is still above the base fabric, the looper again moves forward in its second stroke of the stitch cycle to carry the yarn loop forward across the needle path thereby stretching the loop opening to receive the needle upon its next downstroke. After the needle penetrates the opening in the yarn loop, the looper again retracts toward its rearward position. The downstroke of the needle pulls the yarn down through the base fabric to tighten the yarn loop about the needle and about the yarn carried by the needle in forming the next yarn loop. As soon as the looper has been completely withdrawn from the previously formed loop and is commencing its first stroke in the next stitch cycle, it is engaged in the next yarn loop carried by the needle.

### Object of the invention.

It is the object of the present invention to provide a device and a method for producing a composite sandwich structure, wherein the risk to the absence of a connection between subsequent fibre columns may be reduced. This is achieved according to the invention with the technical features of the characterizing part of the first claim.

Thereto, the device of the present invention is **characterised in that** the connecting fibre inserting device comprises at least one needle bar which extends transversally in the moving direction of the sandwich structure and which comprises a plurality of spaced apart needles depending from the needle bar, in that the movement of which is driven by a driving device, in that the connecting fibre inserting device also comprises at least one looper which is provided to co-operate with at least one needle for seizing a loop of connecting fibre created by the corresponding needle when penetrating the sandwich structure with a yarn of connecting fibre, in that the movement of the looper is driven by a driving device which is provided to drive the movement of the looper independently of the needle bar.

By driving the looper independently of the corresponding needle, the displacement of the looper can be adjusted taking into account the position of the needle and the yarn loop produced by the needle, to maximise the chance that the yarn loop produced by the needle is seized by the looper and continuous connection is provided. This way the occurrence of subsequent stitches the loops of which are not connected along the second face sheet of the sandwich structure, may be minimised. The independent driving of the looper permits controlling the stretching of the loops in such a way that the loops which run along the lower surface of the second face sheet are tightened, but not strained, thus minimizing the risk to damaging the sandwich structure. The independent driving of the looper further permits controlling of the movement of the looper in such a way that subsequent loops have similar dimensions in the forwarding direction of the sandwich structure. This may be important to ensure that mechanical properties of the sandwich structure are constant.

According to a first embodiment of the invention the connecting fibre inserting device comprises a plurality of loopers mounted to a looper bar, and the movement of the looper bar is driven independently of the movement of the needle bar. According to another embodiment, the connecting fibre inserting device comprises a plurality of loopers and the movement of each looper is individually driven, independently of the movement of other loopers.

In order to ensure that connected subsequent loops extend along the lower surface of the second face sheet, that subsequent loops have the desired dimensions in the moving direction of the sandwich structure through the device to provide the desired mechanical properties, in order to minimise the risk to the occurrence of entangled loops of adjacent rows, the movement of the looper is preferably arranged such that the looper engages the yarn loop of connecting fibre at a position adjacent to the lower surface of the sandwich structure. The probability that the loop is grasped by the looper may be increased by providing a recess in the needle for receiving the connecting fibre yarn, yarn adjacent a tip part of the needle. Both technical features co-operate to control the length of the yarn loop at the time it is grasped by the looper and have the loop occurring at a predictable, envisaged and/or recurring position. If so desired, the device may comprise a sensor for detecting the position of the lower surface of the sandwich structure and for producing a corresponding signal to the control unit, which control unit is provided to control the displacement of the looper towards a position adjacent to the lower surface, based on said signal to seize the loop.

In case production of composite panels of varying thickness is envisaged, it may be desirable to have the length of the downward stroke of the needle adjustable. Adjustability of the length of the downward stroke also permits compensating small differences in the thickness of the structure that is to be connected.

The invention is further illustrated in the appending figures and the figure description given below.
Figure 1 shows a picture of the sandwich structure of the present invention.
Figure 2 shows a cross-section of the device according to the present invention, illustrating the method for producing the composite sandwich structure.
Figure 3-10 illustrate the process of connecting the first and second face sheet and the core material together by inserting connecting reinforcing fibres.
Figure 11 shows a cross-section of a sandwich structure according to the invention, with the parts drawn apart from each other.

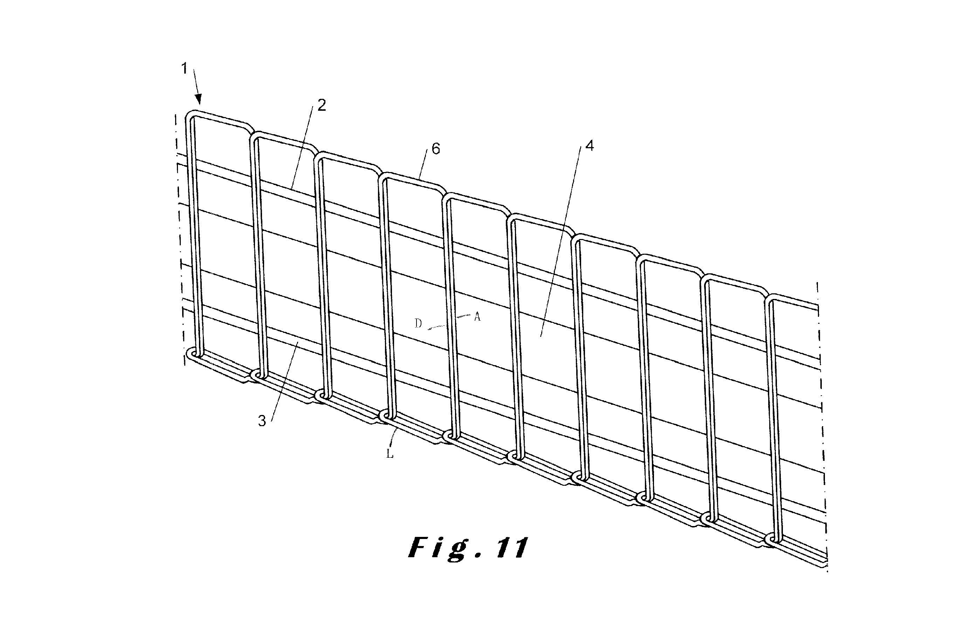

The preferred embodiment of the sandwich structure shown in Figure 1 and 11 comprises a first 2 and second 3 face sheet of fibrous reinforcing material which sandwich between them a core material 4. A plurality of connecting reinforcing fibres 6, which connect the first face sheet 2, the core material 4 and the second face sheet 3 is extending through the sandwich structure along the thickness direction. In the preferred embodiment shown in figure 1, the connecting fibres take the form of a chain of subsequent stitches of fibrous reinforcing material, which stitches are connected to each other along an upper face of the first face sheet and along a lower face of the second face sheet in the moving direction of the sandwich structure. The stitches shown in figure 11 comprise a descending part D which descends from the upper face sheet 2 towards the lower face sheet 3, a loop part L and an ascending part A which ascends from the lower face sheet 3 towards the upper face sheet 2. The ascending and descending part of a next stitch, penetrate and extend through the loop part of a previous stitch thereby forming a chain of connected stitches.

The device for producing the sandwich structure 1 shown in figure 2 comprises a first and second feeding for feeding a first 2 and second 3 sheet of fibrous reinforcing material in the form of a fabric or mat on opposite sides of a longitudinal sheet of the core material 4, to form the upper and lower face sheets of the sandwich structure 1. The first and second feeding may for example comprise a first and second roll located on opposite sides of the sheet of core material 4. The first and second feeding may also comprise a plurality of first and second rolls for feeding a plurality of super imposed first 2 and second 3 fibrous reinforcing sheets. The device further comprises a device for applying connecting fibers 5. The device may further comprise a first 8 and second 9 pulling device mounted at a position in front of and behind the connecting fibre inserting device 5.

Preferably the connecting fibre inserting device 5 comprises a plurality of connecting fibre application devices 5 for applying the connecting fibres 6. Any type of connecting fibre application device 5 considered suitable by the skilled person may be used, for example a needle, a hook a rod with a circumferential notch etc. Preferably use is made of a needle with a needle tip has a flattened shape in the vicinity of the needle tip. To facilitate entraining of the connecting fibres by the needle and better controlling the tensioning of the connecting fibre, the needle may comprise a circumferential groove for receiving the connecting fibrous material. In stead of a circumferential groove, the needle may contain a hole in the vicinity of the needle tip, for receiving the connecting fibrous material. If so desired, a fixation device, for example a hook or a ring may be mounted to a top part of the needle to facilitate entraining of the descending part D of the connecting fibrous material by the needle. The continuous fibrous material will usually fed from a plurality of creels or feed rolls, which may be driven or programmed by means not shown.

The connecting fibre inserting device will usually comprise a bar which extends transversally in the moving direction of the sandwich structure from which a plurality of needles, hooks or rods depend, hereafter referred to as "needle bar". Adjacent needles may be uniformly spaced from each other, or the distance between adjacent needles may vary depending on the way in which the connecting fibres are to be applied. Needles may be positioned in a straight row, they may take a staggered configuration or any other configuration considered suitable by the skilled person. The device may comprise two or more needle bars. The bar or bars are provided to exert a reciprocating movement in height direction of the sandwich structure to insert the connecting fibres. Thereto, a reciprocating driving device for the needle bar is provided. The needle bar or bars are arranged in the device on a position to face the first face sheet 2. The needle bar is movable between a retracted position in which it is not contacting the multilayer object 1 to a penetrating position in which the needles penetrate the multilayer object 1 to apply the connecting fibres 6.

The connecting fibre inserting device of this invention also comprises at least one looper arranged on a side of the device facing the lower surface of second face sheet 3. The at least one looper is provided to co-operate with at least one needle for seizing a loop of connecting fibre which is produced at the lower surface of the second face sheet 3. Thereby, a plurality of loopers may be mounted to a bar, whereby each looper is provided to co-operate with a corresponding needle. It is however also possible to mount all or part of the loopers independently from the others. A device comprising a plurality of needle bars will usually comprise a plurality of corresponding looper bars. The movement of the looper is preferably driven by a looper driving device which is provided to drive the movement of the looper independently of the driving device of the needle bar. According to a preferred embodiment, the displacement of the looper or looper bar is controlled by a control unit to optimize co-operation between a looper and the corresponding needle and ensure that the loop of the connecting fibre may be grasped by the looper. The control unit may be designed to communicate with a detector for detecting the position of the loop of the connecting fibre or the needle and to adapt the movement of the looper accordingly. If so desired, the looper may be mounted in a floating manner, independently of the other moving parts of the device. The control unit may also be provided to control the reciprocating movement of the needle bar.

The looper is preferably mounted in such a way that it engages the loop of connecting fibre at a position adjacent to the lower surface of the sandwich structure, to permit achieving a tightened but unstrained connection of the face sheets and the core. Thereto the device may comprise a sensor for detecting the position of the lower surface of the sandwich structure and for producing a corresponding signal to the control unit, where the control unit is provided to control the displacement of the looper towards a position adjacent to the lower surface, based on said signal, to seize the loop.

In one embodiment of the looper, the looper may be laterally curved to form a dished-out portion, to guide the needle on its downstroke past the looper. Also, the looper may comprise a groove adapted to receive, and assist in holding, the yarn loop after the yarn loop has been seized.

A wide variety of fibrous reinforcing materials may be used for the connecting fibres for example a material selected from natural fibres, for example metal fibres, mineral fibres, glass fibres, carbon fibres, wool, cotton, flax etc; or synthetic fibres, for example polyester, polypropylene, polyethylene, polyamide, or mixtures of two or more of these fibres. However, because of its high impact strength the use of aramid fibres is preferred. Connecting fibres may take the form of a yarn, strands, tows and the like, but in the description hereafter "yarn" will refer to the aforementioned useful forms. To apply the connecting fibres, yarn is usually fed from a plurality of creels through yarn guides and a yarn guide in the needle bar, to each of the needles to be carried by the corresponding needle.

When applying the connecting fibres, the needle is provided to take along a length of connecting fibre when reciprocating in and out of the sandwich structure from the first face sheet to the second face sheet and back, thereby forming a loop at the lower surface of the second face sheet. As the needle descends through the first face sheet, the core material and the second face sheet, towards its lowermost position and ascends from there again towards the first face sheet, a loop is formed by the connecting fibre yarn entrained by the needle. The loop is formed on and will usually protrude with respect to the second face sheet.

Inserting of the connecting fibres 6 is preferably done in a stepwise, discontinuous manner, according to which the displacement of the multilayer object 1 throughout the device usually in longitudinal direction, is interrupted as the needles 11 partly or fully penetrate the multilayer object, and preferably also in the course of each downward and upward movement of the needles 11 through the multilayer object 1. The sandwich structure may be subjected to displacement when the needles do not penetrate the structure. Thereby, it may be envisaged to have the length of the downward stroke of the needle adjustable, to permit processing sandwich structures of varying thickness and accommodating local variations in thickness.

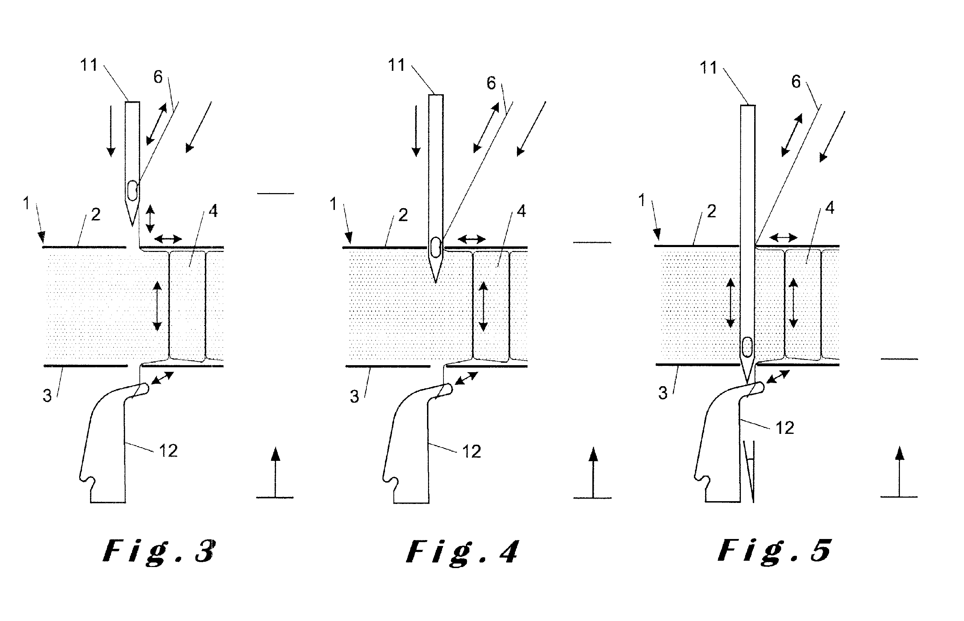

The operation of the fibre inserting device 5 according to the invention is illustrated in figures 3-8. The connecting fibre inserting device 5 comprises a plurality of needles (only one needle is shown in the figures) which are displaceable in the height direction of the core 4 between a retracted position in which the connecting fibre inserting device 5 is not contacting the multilayer object 1, and a penetrating position in which the connecting fibre inserting device 5 is penetrating the multilayer object 1. The connecting fibre 6 may be fed from a spool in a controlled manner supplying a pre-determined length of connecting fibre 6 at each insertion. The first operational step of the fibre inserting device 5 is shown in figures 3 and 4, where the needle 11 is pushed in downward direction into and through the mulitylayer structure, from a retracted position. As the needle 11 moves in downward direction through respectively the first face sheet, the core and the second face sheet, a length of descending connecting fibre 6 is taken along until at least part of the tip of the needle 11 exits the lower face sheet 3. Then the needle 11 is retracted leaving a loop of connecting fibre 6, protruding from the lower face sheet 3. A looper 12, mounted in the device 5 facing the lower side of the multilayer object 1, is holding the loop of connecting fibre 6 which has been inserted in the previous insertion step. The tension in the fibre 6 depends on the feed of the fibre 6 and the velocity of the needle 11. The needle 11 is retracted further through the first face sheet 2 and the core material 4.

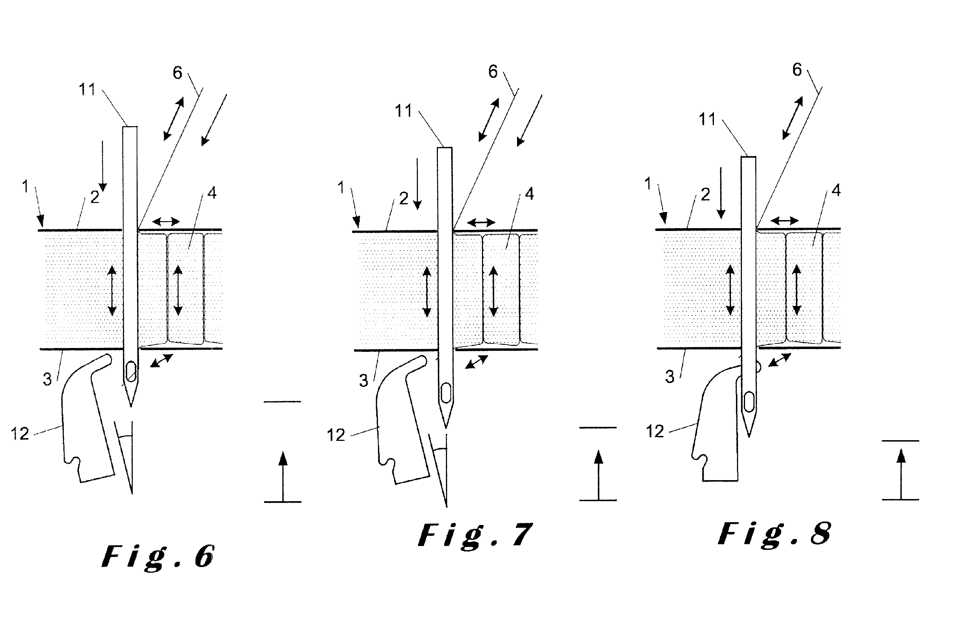

When the needle 11 reaches the bottom of the multilayer object 1 and pierces through the second face sheet 3, looper 12 is rotated backwards to add tension to the previously inserted fibre 6 and retains the loop, as shown in figure 5. Figure 6 and 7 show that as the needle 11 moves further downwards, the looper 12 is rotated backwards to its rearmost position and releases the loop when the needle 11 penetrates the loop. As the needle 11 moves further downwards, the loop of the previous stitch gets tightened. Figure 8 is a schematic illustration of the next step, when the needle 11 reaches its lower position and the looper 12 rotates back to its initial position and catches the next loop of connecting fibre 6 that goes through the needle.

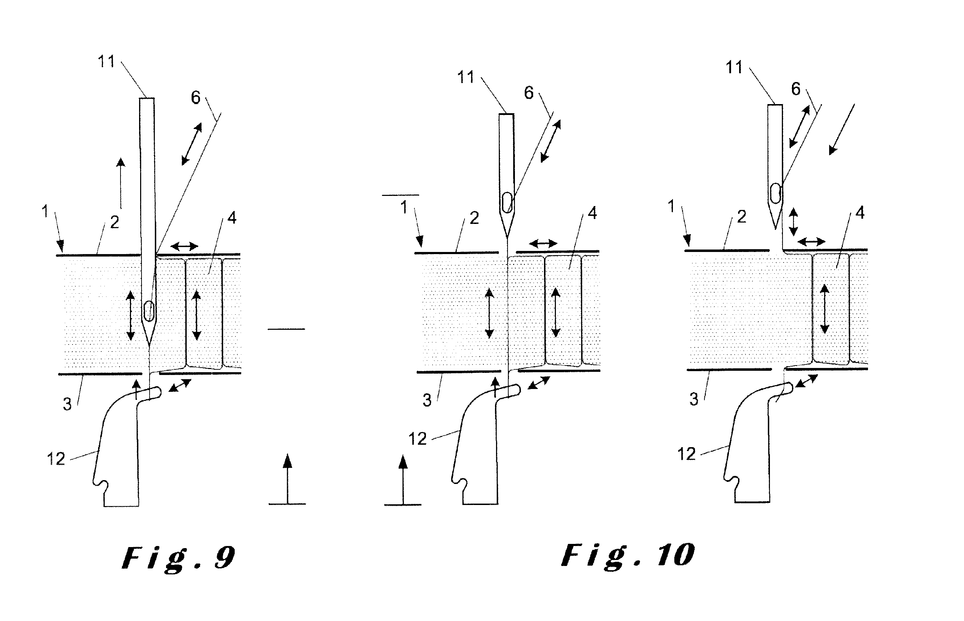

The needle 11 is provided to penetrate the multilayer object 1 over a pre-determined distance, depending on the thickness of the multilayer object 1, where the distance should be at least equal to the thickness of the multilayer object 1 to permit formation of connected loops along the lower face of the multilayer object 1. The operation of both needle 11 and looper 12 are preferably synchronized in a way that the looper 12 is able to catch the next loop. Figure 9 shows how the needle 11 moves back upwards to its upper position, through the opening it made in the face sheets 2, 3 and core 4 while the looper 12 retains the new loop of connecting fibre 6, protruding from the lower side of the multilayer object 1. When the needle 11 has reached its upper position, the connecting fibre inserting device 5 is in its retracted position and the sandwich structure 1 is pulled one step forward, as illustrated in figure 10. The looper moves forward in a second stroke of the stitch cycle to carry the connecting fibre yarn loop forward across the needle path, along the second face sheet. In this forward position of the looper, the loop is stretched so that the opening of the loop is in alignment with the needle to receive the needle upon its next downstroke.

Within the scope of this invention needles may penetrate the multi-layer object in a direction which is substantially perpendicular to the surface of the face sheets, the so-called Z-fibres, or under an angle which is less than 90°, for example 10-80° to produce so-called X-fibres. With x-stitches in the multilayer object 1 being applied, a first set of needles 11 may be penetrating the multilayer object 1 from the upper side of the multilayer object 1 and a second set of needles 11 may penetrate the multilayer object 1 from the lower side of the multilayer object 1, or both sets may penetrate the multilayer object from the same upper side. For the particular set-up a looper 12 should be present facing both the upper side and the lower side of the multilayer object 1.

Forwarding of the multilayer structure through the device may be done using any technique considered suitable by the skilled person. The displacement is preferably done in a stepwise discontinuous manner, according to which the sandwich structure 1 is pulled forward when the multilayer object 1 is not penetrated by the device 5 which applies the connecting fibres 6. The displacement may for example be imparted by a set of successive calanders, each calander being driven by a motor and a transmission. A stepwise displacement may be achieved by using clamping means which are provided to clamp the sandwich structure 1, move the sandwich structure 1 to a forward position, release the sandwich structure 1 and return to their original position. Preferably however use is made of a pulling device, which operates within the framework of a pulltrusion device to permit a simultaneous impregnation of the multilayer structure with resin. It is however also possible to use a device in which the needles 11 and hooks are displaceable with respect to the multilayer object 1, in longitudinal direction of the device. Thereby the multilayer object 1 is held stationary.

A pulltrusion device 7 suitable for use with this invention comprises an impregnation chamber for impregnating the sandwich structure 1 with a liquid plastic material. The impregnation chamber comprises a conduit for feeding the liquid plastic material from a reservoir to the impregnation chamber, and injecting the liquid plastic material under a slight over pressure. Excess plastic material is returned to the reservoir through a second conduit. The pulltrusion device 7 further comprises a device or heated chamber for hardening or curing the plastic material of the thus impregnated composite laminate. The residence time in the heating chamber is selected such that a sufficient hardening of the sandwich structure is achieved before it is contacted by the third pulling device.

The present invention permits to provide the connecting fibres 6 to the connecting fibre inserting device 5 in a controlled manner such that the connecting fibres 6 are tightened without being strained and not too loose, thereby minimising the risk of necking or causing constrictions in the faces of the sandwich structure 1.

In the method according to the invention, the core material 4 is inserted in the device as a continuous panel or beam. The dimensions of the sandwich structure 1 in x, y and z direction are not critical to the invention and may vary within wide ranges.

The core sheet may be made of a wide variety of materials. Mostly use will be made of a foamed plastic material, for example foamed polyethylene, polypropylene, polyurethane, ethylene-propylene copolymer. The core can however also be made of a foamed metal or a metal containing foam.

The use of polyurethane is preferred as it is a relatively cheap material, which is readily industrially available and has a sufficiently high thermal resistance to withstand oven temperatures used to cure the resin with which the laminate is impregnated. Particularly preferred is low density polyurethane foam having a density of between 2-5 pound/foot³, as this type of foam shows a good thermal resistance, in particular when envisaging use as a wall or part of a wall for cooled containers. Although this type of polyurethane may be rather light, the reinforcement provided by the presence of the tufting fibres provides the required strength in z-direction. It is however also possible to use as the core sheet material two or more superimposed layers of foamed material, subsequent layers of foamed material sandwiching between them a layer of a fibrous reinforcing material. Superimposed foam layers may be made of the same material or of different materials. The nature of the fibrous reinforcing material sandwiched between two foamed cores is not critical to the invention, although it is preferred to use a fabric or a mat of a woven or non-woven material. The core sheet material may be used in the form of a plurality of individual prefabricated plates of foamed plastic. It is however also possible to precede the process of this invention with a step of manufacturing foamed panels.

The plastic material used to impregnate the multilayer object may be a thermosetting or thermoplastic resin. Suitable thermosetting materials for use in the present invention include thermosetting unsaturated polyester resins, vinylester resins, epoxy resins, phenolic resins, polyurethane resins.

In the composite sandwich structure of this invention, the first and second face sheets of fibrous reinforcing material will mostly comprise or be made of a sheet, a fabric or mat of a fibrous reinforcing material, which may be preimpregnated with a thermoplastic or thermosetting resin or not, which may be a woven or non-woven product. The material of which the first and second face sheets are made may be the same or different. It is however also possible to apply to each side of the core two or more fabrics or mats, which may be made of the same or a different material. It is further possible to have one or more of the face sheets built up of alternating first and second materials, for example alternating glass fibre mats and mats comprising a mixture of glass fibre and metal fibre. However, such a fibrous reinforcing material may also be present at a more central position of the laminate.

## Claims

1. A device for producing a composite sandwich structure, wherein the sandwich structure comprises at least a first and second face sheet of a fibrous reinforcing material sandwiching between them a sheet of a core material, the device comprising a connecting fibre inserting apparatus for connecting the first face sheet, the core material and the second face sheet by means of connecting fibres of fibrous reinforcing material, which are connected to each other along an upper face of the first face sheet and along a lower face of the second face sheet in the moving direction of the sandwich structure,
**characterized in that** the connecting fibre inserting device comprises at least one needle bar which extends transversally in the moving direction of the sandwich structure and which is provided to exert a reciprocating movement in height direction of the sandwich structure, which needle bar comprises a plurality of spaced apart needles depending from the needle bar and is arranged to face the first face sheet, wherein a plurality of needles is provided to take along a length of connecting fibre yarn when reciprocating in and out of the sandwich structure thereby forming a loop at the lower surface of the second face sheet, wherein the connecting fibre inserting device also comprises at least one looper arranged on a side facing the second face sheet, which at least one looper is provided to co-operate with at least one needle for seizing the loop of connecting fibre, and wherein the movement of the looper is driven by a driving device which is provided to drive the movement of the looper independently of the needle bar.

2. A device according to claim 1, wherein the connecting fibre inserting device comprises a plurality of loopers mounted to a looper bar, wherein the movement of the looper bar is driven independently of the movement of the needle bar.

3. A device according to claim 1, wherein connecting fibre inserting device comprises a plurality of loopers and the movement of each looper is individually driven, independently of the other loopers.

4. A device according to any one of the preceding claims, wherein the at least one looper is floatingly mounted.

5. A device according to any one of the preceding claims, wherein the device comprises a control unit which is connected to at least one needle to register the position of the at least one needle, which control unit is connected to the at least one looper and provided to control the displacement of the looper with respect to the corresponding needle based on the position of the needle.

6. A device according to claim 5, wherein the device comprises a sensor for detecting the position of the needle and of controlling the displacement of the looper with respect to the corresponding needle.

7. A device according to any one of the preceding claims, wherein the looper is provided to engage the yarn loop at a position adjacent to the lower surface of the sandwich structure.

8. A device according to any one of the preceding claims, wherein the device comprises a sensor for detecting the position of the lower surface of the sandwich structure and for producing a corresponding signal to the control unit, which control unit is provided to control the displacement of the looper towards a position adjacent to the lower surface, based on said signal to seize the loop.

9. A device according to any one of the preceding claims, wherein the length of the downward stroke of the needle is adjustable.

10. A device according to any one of the preceding claims, wherein the needle bar is mounted to reciprocate in thickness direction of the sandwich structure.

11. A device according to any one of the preceding claims, wherein the needle bar is mounted to reciprocate under an angle which is less than 90° with respect to the thickness of the sandwich structure, preferably 10-80°, more preferably 30-70°.

12. A device according to any one of the preceding claims, wherein the needle has a flattened shape in the vicinity of the needle tip.

13. A device according to any one of the preceding claims, wherein the needle comprises a circumferential groove for receiving the yarn.

14. A device according to any of the preceding claims, wherein a ring is mounted around a top part of the needle to fix the position of the yarn.
